# EUROPEAN PATENT APPLICATION

(11) **EP 2 107 357 A1**
(43) Date of publication of application: **07.10.2009**
(21) Application number: 08425216.2
(22) Date of filing: 03.04.2008
(51) Int. Cl.: G01M 3/24, G01M 3/28

(54) **Method for detecting the presence of leaks in a water distribution network and kit for applying the method**

(71) Applicant: HERA S.p.A., 40127 Bologna (BO) (IT)
(72) Inventor: Leoni, Giancarlo, 40065 Pianoro (IT); Anzalone, Claudio, 47100 Forli (IT); Giunchi, Daniele, 47100 Forli (IT); Nascetti Davide, 40139 Bologna (IT)
(74) Representative: Modiano, Micaela Nadia

(57) **Abstract**

A method (1) for detecting the presence of leaks in a water distribution network (2), which comprises the steps of: acquiring (6) the consumption-related data indicated by the at least one remote consumption meter (7) located upstream of each user device and of individual distribution stations; arranging and using (8) at least one sensor (9) along the pipes (5) that constitute the water distribution network (2), the sensor being designed to detect signals of any kind generated on the pipe (5) as a consequence of a leak (4); comparing (10) the data acquired by the at least one remote meter (7) with the signals collected by the at least one sensor (9); locating (13) the leak, if any, by means of the concurrence of consumption-related data outside of the standardized parameters detected by the at least one remote meter (7) and of signals detected by the sensor (9) which correspond to leaks (4). The position of each individual remote meter (7) and of each individual sensor (9) is perfectly known and therefore allows to locate the corresponding leak (4).

## Description

The present invention relates to a method for detecting the presence of leaks in a water distribution network and to a kit for applying the method.

Aqueducts and water distribution networks in general have the purpose of conveying water from a main tank (understood broadly as any reservoir for storing the liquid) to a plurality of users, with the interposition of suitable flow management and control apparatuses.

Of course, damage to one of the pipes that constitute the water distribution network (or even just a small portion thereof) entails the escape of water and its dispersion into the ground.

Besides the obvious economic damage, it is equally clear that from an environmental and ecological standpoint leaks are a severe problem.

The water conveyed by aqueducts and by water distribution networks has in fact generally been purified: this process has necessarily entailed an energy expenditure, which is pointless if the purified water is lost into the environment.

Likewise, it is in the interest of the organizations and companies given the task of water distribution to minimize losses in order to comply with directives, statutory provisions and laws issued to avoid the waste of resources which are precious for the community, as indeed is water.

Identification and location of leaks in a pipe (which is generally buried) are very complex.

For this reason, it is known to adopt cross-checks on the meters (designed to measure the amount of liquid that passes through a given section of the pipe) of a given region in order to identify the area in which the leak occurs.

This type of check does not allow precise location of the fault, if any, and therefore the necessary swiftness of intervention and also does not allow to minimize the consequent inconvenience to the population.

Specific fault detection units are also adopted, but they are generally rather complex and therefore their installation, management and maintenance entail high costs, which in some cases cannot be reconciled with the cost caps provided for the operation of the water distribution network.

The aim of the present invention is to provide a method for detecting the presence of leaks in a water distribution network of a type which is adapted to locate a leak precisely.

Within this aim, an object of the present invention is to provide a method for detecting the presence of leaks in a water distribution network which is easy to implement and suitable to cooperate with the standard components that are normally present in the water distribution network.

Another object of the present invention is to provide a kit for applying said method which is easy to install and simple to manage.

Another object of the present invention is to provide a kit for applying said method which has low installation, management and maintenance costs although it ensures high reliability and precision.

Another object of the present invention is to provide a method for detecting the presence of leaks in a water distribution network and a kit for applying said method which are simple and safe to apply.

This aim and these and other objects, which will become better apparent hereinafter, are achieved by the present method for detecting the presence of leaks in a water distribution network, which comprises the steps of: acquiring the consumption-related data indicated by the at least one remote consumption meter located upstream of each user device and of individual distribution stations; arranging at least one sensor along the pipes that constitute said water distribution network, said sensor being designed to detect signals of any kind generated on the pipe as a consequence of a leak; comparing the data acquired by the at least one remote meter with the signals collected by the at least one sensor; locating the leak, if any, by means of the concurrence of consumption-related data outside of the standardized parameters detected by the at least one remote meter and of signals detected by the sensor which correspond to leaks, the position of each individual remote meter and of each individual sensor being perfectly known and therefore allowing to locate the corresponding leak.

Further characteristics and advantages of the invention will become better apparent and evident from the following detailed description of a preferred but not exclusive embodiment of a method for detecting the presence of leaks in a water distribution network and a kit for applying said method, illustrated by way of non-limiting example in the accompanying drawings, wherein:

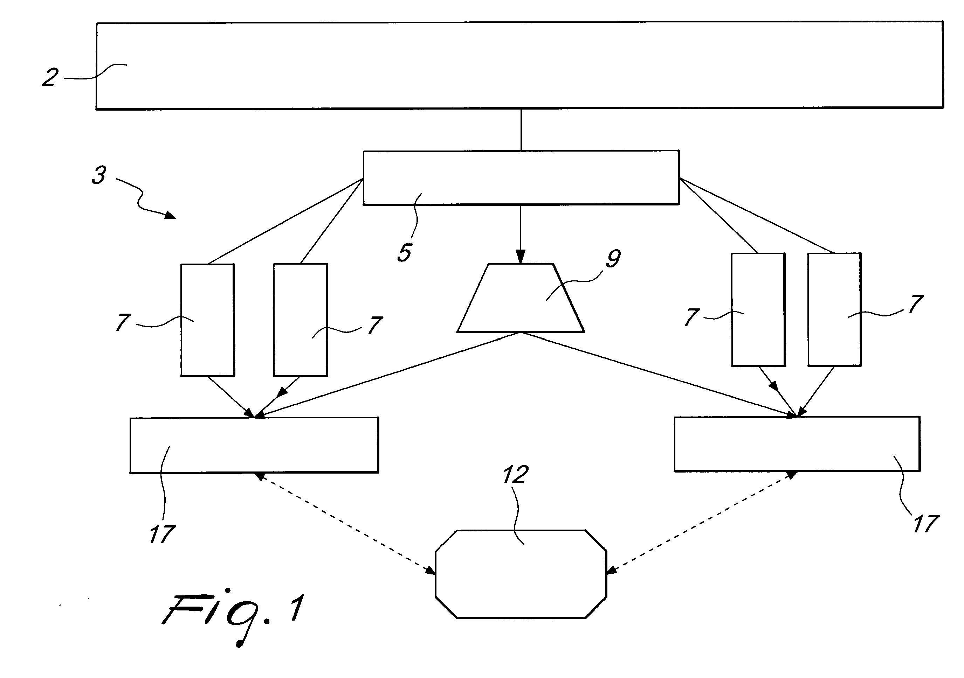

Figure 1 is a block diagram of a distribution network provided with the kit for applying the method for detecting the presence of leaks in a water distribution network according to the invention;

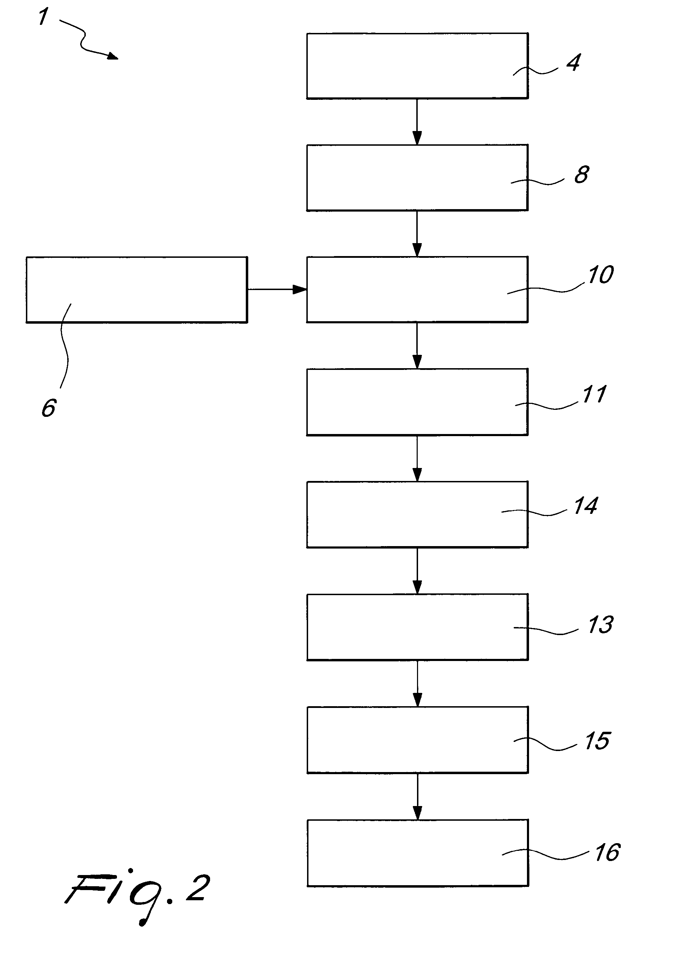

Figure 2 is a functional block diagram of a possible method for detecting the presence of leaks in a water distribution network according to the invention;
Figure 3 is a perspective view of a portion of a water distribution network which comprises the kit for applying the method for detecting the presence of leaks according to the invention.

With reference to the figures, the reference numeral 1 generally designates a method for detecting the presence of leaks in a water distribution network 2 and the reference numeral 3 designates a kit for applying the method 1.

The method 1 provides for a series of consecutive steps performed by means of the components that constitute the kit 3.

Upon occurrence of a fault, step 4, in a pipe 5 it is therefore possible to apply in sequence the steps of the method 1.

A first step 6 consists in acquiring the consumption-related data indicated by the at least one remote consumption meter 7 located upstream of each user device. The meters 7 are further located in strategic positions of the network 2 in order to identify the overall consumptions related to preset areas, for example determining distribution stations which serve these areas: such stations comprise upstream a respective meter 7.

A second step 8 consists in arranging and using at least one sensor 9 along the pipes 5 that constitute the water distribution system 2: the sensor 9 is designed to detect the signals of any kind generated on the pipe 5 as a consequence of a leak.

In particular, the sensor 9 must detect the presence of vibrations on the pipe 5 whose value is not comprised within a predetermined interval: such interval corresponds to the vibrations that can be observed normally in the regular operation of the pipe 5.

It is appropriate to stress that the sensitivity and resolution of the at least one vibration sensor 9 and the limits of the interval of vibrations that correspond to regular operation are determined as a function of the material that constitutes the respective pipe 5, its dimensional parameters and the laying method of the pipe 5. The pipe 5 made of metallic material in fact will transmit vibrations more effectively than a pipe made of polymeric or composite material; likewise, high thicknesses or particular shapes may contribute to the amplification (or damping) of such vibrations. Finally, the pipe 5 can be placed within suitable compartments, in which the pipe 5 is substantially suspended on appropriate supports, or can be of a completely buried type (with the optional interposition of material which constitutes a bed for its support): in this case, the damping effect of the support or of burial determines the limit values of the vibration interval that corresponds to regular operation.

A third step 10 in turn provides for comparison of the data acquired by the at least one remote meter 7 with the signals collected by the at least one sensor 9.

In practice, a leak 4 necessarily determines the onset of vibrations along the pipe 5: the vibrations are detected by the sensor 9. At the same time, a check is performed to determine whether the user devices downstream of the sensor 9 (and downstream of the respective meters 7) have consumed water.

If no consumptions have occurred, a condition is determined which, for the comparison step 10, corresponds to the probable fault 4 with corresponding leaks.

At this point, it is advisable to perform a transmission 11 of the signal that corresponds to the presence of the fault 4 to a control and management unit 12.

A subsequent step 13 consists in locating the leak 4, if any, by means of the concurrence of data related to consumptions which are beyond the standardized parameters detected by the at least one remote meter 7 and of signals detected by the sensor 9 which correspond to the leaks 4.

The position of each individual remote meter 7 and of each individual sensor 9 is in fact perfectly known and therefore the operators assigned to run the water distribution network 2 can locate the corresponding leak 4 unequivocally.

It should be noted that the step 6 for acquiring consumption data, the step 8 for detecting the signals monitored by the at least one sensor 9, and the step 10 for comparing them, with subsequent location, step 13, are repeated a specific number of times to confirm and validate the presence (step 11) of the leak 4 and of its location, step 13.

According to an embodiment of particular interest in practice and in application, the method 1 can provide for an integration of information by determining the water balance, step 14, of the region in which the leak 4 has been located. In this manner, it is possible to have an optional confirmation of the presence of the leak 4 within the area of such region: an increase in water consumption in the region which is not matched by an increase in the consumption detected by the meters 7 installed in the region is in fact a clear indication of the presence of the leak 4.

By means of assessments of the water balance it is therefore possible to eliminate cases in which determination of the leak is not certain and in which, for example, a false positive has occurred in determining and locating said leak.

Of course, as soon as the leak has been identified and correctly located, the management authority must send, step 15, specialized workers to the location of the fault to perform repair 16 of the leak 4.

For greater reliability of the verifications performed by means of the method 1, its steps are performed preferably during the night, when water consumption and vibrations which can be attributed to other sources of noise, such as for example vehicle circulation, are at a minimum, and are repeated according to predefined timings with a constant sensing duration.

For example, a hypothetical operating cycle which provides high reliability of the method 1 can provide for repetition of the steps of the method 1 from 1 a.m. to 5 a.m. with a frequency of the sensings of the sensor 9 of two sensings per hour. Each one of these sensings may last (for example) one minute.

Of course, if the step for sensing vibrations has a positive outcome, determining vibrations whose value is not comprised within a reference range, the validation of this sensing is dependent on the verification of the absence of transients of water flow in the pipe 5 determined by means of the remote consumption meters 7.

The repetition timings can be constant, if the presence of a leak is not determined, and variable, for rapid repetition of the cycle of the sensing method 1, if the presence of a leak is determined. This rapid repetition has the purpose of validating the presence of the leak. A variable management of the cycle times of the various steps therefore allows greater precision in determining the presence of the leak and its subsequent location.

The kit 3 for applying the method 1 comprises at least one remote consumption meter 7 which is located upstream of each user device and of individual distribution stations, at least one sensor 9 intended to detect signals of any kind generated on the pipe as a consequence of a leak, at least one control and management unit 12 and a network for intercommunication 17 between the at least one device 7, the at least one sensor 9 and the at least one unit 12.

In particular, the sensor 9 is an apparatus intended to detect only vibrations on the pipe 5 and to convert what has been sensed into an electrical signal which is proportional thereto.

It should be noted that the sensor 9 does not comprise signal processing and/or storage apparatuses: the detected vibrations, conveniently transduced into a transmissible signal, are sent to suitable control apparatuses (for example the unit 12) for the subsequent operations of the method.

According to an embodiment of particular interest in practice and in application, the sensor 9 for sensing vibrations on the pipe 5 is an accelerometer.

Of course, the vibration sensor 9 has functional parameters, such as sensitivity and resolution, which are determined by the dimensions and by the material that constitutes the respective pipe 5 and by the manner in which the pipe 5 is laid.

It should be noted that the kit 3 can comprise a local calculation unit 18, which is arranged proximate to at least one respective remote meter 7 and at least one respective sensor 9 and is functionally connected thereto.

The assembly 18 is adapted to acquire the signals provided by the device 7 and by the sensor 9 and to compare them, and to send to the control and management unit 12 alternating information strings which correspond respectively to the correct operation of the pipe 5 involved and to the determination of a leak.

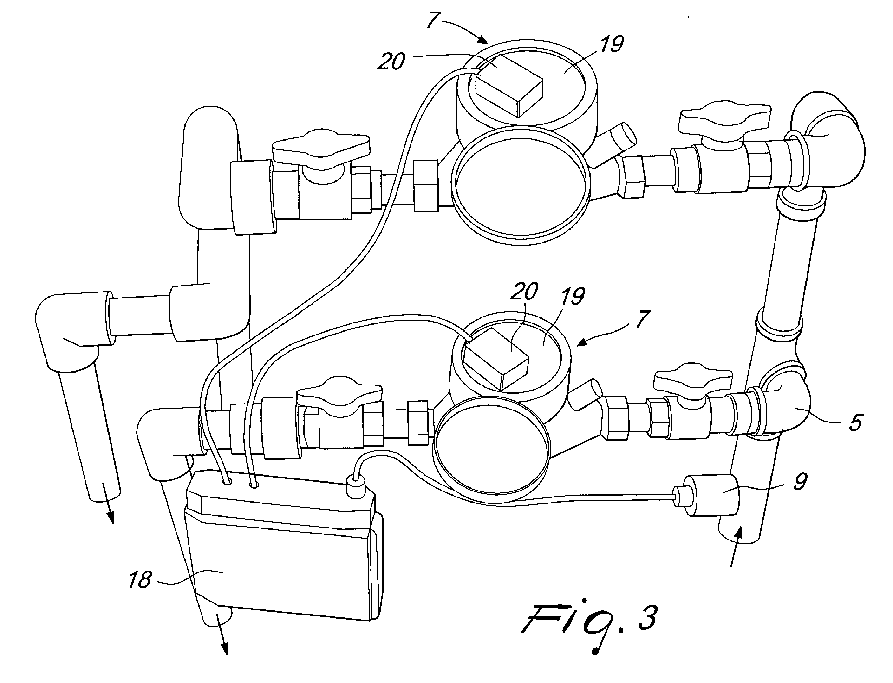

As can be verified by analyzing Figure 3, the devices 7 may comprise an actual meter 19 of the traditional type, with which it is possible to associate a reader 20.

All the readers 20 associated with respective meters 19 and the sensor 9 connected to the pipe 5 that feeds the meters 19 are connected to one single unit 18, which performs the comparison and verification operations and then sends, over the elements of the intercommunication network 17 comprised therein, the signal that corresponds to the presence (or absence) of the fault, step 4, in the pipe 5.

It has thus been shown that the invention achieves the proposed aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for detecting the presence of leaks in a water distribution network (2), comprising the steps of:
acquiring (6) the consumption-related data indicated by the at least one remote consumption meter (7) located upstream of each user device and of individual distribution stations;
arranging and using (8) at least one sensor (9) along the pipes (5) that constitute said water distribution network (2), said sensor being designed to detect signals of any kind generated on the pipe (5) as a consequence of a leak (4);
comparing (10) the data acquired by the at least one remote meter (7) with the signals collected by the at least one sensor (9);
locating (13) the leak, if any, by means of the concurrence of consumption-related data outside of the standardized parameters detected by the at least one remote meter (7) and of signals detected by the sensor (9) which correspond to leaks (4), the position of each individual remote meter (7) and of each individual sensor (9) being perfectly known and therefore allowing to locate the corresponding leak (4).

2. The method according to claim 1, **characterized in that** the steps for acquiring (6) the consumption data, for sensing (8) the signals monitored by the at least one sensor (9), for comparing them with subsequent location (13) are repeated a specific number of times to confirm and validate the presence of the leak (4) and its location.

3. The method according to claim 1, **characterized in that** said sensor (9) intended to detect signals of any kind generated on the pipe (5) as a consequence of a leak (4) detects the presence of vibrations whose value is not comprised within a preset interval which corresponds to the regular operation of the pipe (5).

4. The method according to claim 3, **characterized in that** the sensitivity and resolution of said at least one vibration sensor (9) and the limits of said interval of vibrations that correspond to regular operation are determined as a function of the material that constitutes the respective pipe (5), its dimensional parameters and the manner in which said duct (5) is laid.

5. The method according to claim 1, **characterized in that** by determining the water balance of the region in which the leak (4) is located, it is possible to have an optional confirmation of the presence of the leak (4) within the area of said region, in order to eliminate cases in which determination of the leak (4) is not certain, in which a false positive has occurred in determining it and locating it.

6. The method according to claim 1, **characterized in that** said steps are performed preferably during the night, when water consumption and vibrations which can be attributed to other sources of noise, such as for example the circulation of vehicles, are at a minimum, and are repeated according to predefined timings with a constant sensing duration.

7. The method according to claim 1, **characterized in that** if said vibration sensing step (8) has a positive outcome, determining vibrations whose value is not comprised within a reference interval, the validation of this sensing is subordinate to the verification of the absence of water flow transients in the pipe (5) determined by means of the remote consumption meters (7).

8. The method according to claim 1, **characterized in that** the repetition timings are constant if the presence of a leak is not determined and are variable, for a rapid repetition of the cycle of the sensing method (1), if the presence of a leak (4) is determined, in order to validate the presence of said leak (4).

9. A kit for applying the method, **characterized in that** it comprises at least one remote consumption meter (7) which is present upstream of each user device and of individual distribution stations, at least one sensor (9) intended to sense signals of any kind generated on the pipe (5) as a consequence of a leak, at least one control and management unit (12) and a network for intercommunication (17) between said at least one meter (7), said at least one sensor (9) and said at least one unit (12).

10. The kit according to claim 9, **characterized in that** said sensor (9) is an apparatus intended to detect only vibrations on the pipe (5) and to convert the sensing into an electrical signal which is proportional thereto.

11. The kit according to claim 10, **characterized in that** said sensor (9) for sensing vibrations on the pipe (5) is an accelerometer.

12. The kit according to claim 10, **characterized in that** said vibration sensor (9) has functional parameters, such as sensitivity and resolution, which are determined by the dimensions, by the material that constitutes the respective pipe (5), and by the manner in which said pipe (5) is laid.

13. The kit according to claim 9, **characterized in that** it comprises a local calculation unit (18), which is arranged proximate to at least one respective remote meter (7) and at least one respective sensor (9) and is functionally connected thereto, the unit (18) being adapted to acquire the signals provided by the meter (7) and the sensor (9) and to compare them, and to send to the control and management unit (12) alternating information strings which correspond respectively to the regular operation of the pipe (5) involved and to the determination or identification of a leak.

## Amended claims

### Amended claims in accordance with Rule 137(2) EPC.

**1.** A method for detecting the presence of leaks in a water distribution network (2), comprising the steps of:
acquiring (6) the consumption-related data;
arranging and using (8) at least one sensor (9) along the pipes (5) that constitute said water distribution network (2), said sensor being designed to detect signals of any kind generated on the pipe (5) as a consequence of a leak (4);
comparing (10) the data acquired by the at least one remote meter (7) with the signals collected by the at least one sensor (9);
locating (13) the leak, if any, by means of the concurrence of consumption-related data outside of the standardized parameters detected by the at least one remote meter (7) and of signals detected by the sensor (9) which correspond to leaks (4), the position of each individual remote meter (7) and of each individual sensor (9) being perfectly known and therefore allowing to locate the corresponding leak (4);
**characterized in that** said acquiring step (6) of the consumption-related data is indicated by the at least one remote consumption meter (7) located upstream of each user device and of individual distribution stations; and
said sensor (9) intended to detect signals of any kind generated on the pipe (5) as a consequence of a leak (4) detects the presence of vibrations whose value is not comprised within a preset interval which corresponds to the regular operation of the pipe (5); and
the sensitivity and resolution of said at least one vibration sensor (9) and the limits of said interval of vibrations that correspond to regular operation are determined as a function of the material that constitutes the respective pipe (5), its dimensional parameters and the manner in which said duct (5) is laid.

**2.** The method according to claim 1, **characterized in that** the steps for acquiring (6) the consumption data, for sensing (8) the signals monitored by the at least one sensor (9), for comparing them with subsequent location (13) are repeated a specific number of times to confirm and validate the presence of the leak (4) and its location.

**3.** The method according to claim 1, **characterized in that** by determining the water balance of the region in which the leak (4) is located, it is possible to have an optional confirmation of the presence of the leak (4) within the area of said region, in order to eliminate cases in which determination of the leak (4) is not certain, in which a false positive has occurred in determining it and locating it.

**4.** The method according to claim 1, **characterized in that** said steps are performed preferably during the night, when water consumption and vibrations which can be attributed to other sources of noise, such as for example the circulation of vehicles, are at a minimum, and are repeated according to predefined timings with a constant sensing duration.

**5.** The method according to claim 1, **characterized in that** if said vibration sensing step (8) has a positive outcome, determining vibrations whose value is not comprised within a reference interval, the validation of this sensing is subordinate to the verification of the absence of water flow transients in the pipe (5) determined by means of the remote consumption meters (7).

**6.** The method according to claim 1, **characterized in that** the repetition timings are constant if the presence of a leak is not determined and are variable, for a rapid repetition of the cycle of the sensing method (1), if the presence of a leak (4) is determined, in order to validate the presence of said leak (4).

**7.** A kit for applying the method, comprising at least one remote consumption meter (7) which is present upstream of each user device and of individual distribution stations, at least one sensor (9) intended to sense signals of any kind generated on the pipe (5) as a consequence of a leak, at least one control and management unit (12) and a network for intercommunication (17) between said at least one meter (7), said at least one sensor (9) and said at least one unit (12), **characterized in that** said sensor (9) is an apparatus intended to detect only vibrations on the pipe (5) and to convert the sensing into an electrical signal which is proportional thereto, and **in that** said vibration sensor (9) has functional parameters, such as sensitivity and resolution, which are determined by the dimensions, by the material that constitutes the respective pipe (5), and by the manner in which said pipe (5) is laid.

**8.** The kit according to claim 7, **characterized in that** said sensor (9) for sensing vibrations on the pipe (5) is an accelerometer.

**9.** The kit according to claim 7, **characterized in that** it comprises a local calculation unit (18), which is arranged proximate to at least one respective remote meter (7) and at least one respective sensor (9) and is functionally connected thereto, the unit (18) being adapted to acquire the signals provided by the meter (7) and the sensor (9) and to compare them, and to send to the control and management unit (1?) alternating information strings which correspond respectively to the regular operation of the pipe (5) involved and to the determination or identification of a leak.
